# EUROPEAN PATENT SPECIFICATION

(11) **EP 4 123 909 B1**
(45) Date of publication and mention of the grant of the patent: **11.06.2025**
(21) Application number: 21186865.8
(22) Date of filing: 21.07.2021
(51) Int. Cl.: H04B 1/00, H04B 1/40, H04B 7/08

(54) **RECONFIGURABLE MULTIPLE INPUT MULTIPLE OUTPUT WIDEBAND INTEGRATED TRANSCEIVER WITH LOCAL OSCILATOR DISTRIBUTION CIRCUIT**
REKONFIGURIERBARER INTEGRIERTER BREITBAND-SENDER-EMPFÄNGER MIT MEHREREN EINGÄNGEN UND AUSGÄNGEN UND LOKALER OSZILLATOR-VERTEILUNGSSCHALTUNG
ÉMETTEUR-RÉCEPTEUR INTÉGRÉ À LARGE BANDE RECONFIGURABLE À ENTRÉES MULTIPLES ET SORTIES MULTIPLES AVEC CIRCUIT DE DISTRIBUTION D'OSCILLATEUR LOCAL

(30) Priority: 20.07.2021 LT 2021536
(43) Date of publication of application: 25.01.2023
(73) Proprietor: Vilnius Gediminas Technical University, 10223 Vilnius (LT)
(72) Inventor: Kiela, Karolis, 03123 Vilnius (LT); Navickas, Romualdas, 06111 Vilnius (LT)
(74) Representative: Zaboliene, Reda

(56) References cited:
- WO-A1-2014/036519
- WO-A1-2015/183478
- US-A1- 2014 370 882

## Description

### Field of Technology

Transceivers, i.e. devices in which transmitter and receiver form a structural unit and in which at least one part is used for functions of transmitting and receiving.

### Description of related art:

The presented invention relates to reconfigurable wideband integrated transceivers used for wireless radio communications. The invention can be used in network infrastructure, test and measurement, research and development and similar applications, where received or generated radio signals of interest, including, but not limited to, their carrier frequency, modulation, and bandwidth, can change over a wide range.

In US patent application US2014/370882 A1 a wireless device supporting concurrent communication with multiple wireless systems of different radio access technologies (RATs) are disclosed. In an exemplary design of this patent application, an apparatus includes first and second receivers supporting concurrent signal reception from wireless systems of different RATs. The first receiver receives a first downlink signal from a first wireless system of a first RAT. The second receiver receives a second downlink signal from a second wireless system of a second RAT, which is different from the first RAT. The first and second receivers may operate concurrently. The second receiver may be broadband and/or may support carrier aggregation. The apparatus may further include first and second local oscillator (LO) generators to generate LO signals for the first and second receivers, respectively, based on different divider ratios in order to mitigate voltage controlled oscillator (VCO) pulling.WO2014/036519 A1 discloses transceivers implemented with a combination of super-heterodyne and zero intermediate frequency (ZIF) topologies. In an exemplary design, an apparatus includes a frequency conversion circuit and a local oscillator (LO) generator. The LO generator generates a first LO signal and a second LO signal. The frequency conversion circuit performs frequency conversion (i) between intermediate frequency (IF) and baseband, based on the first LO signal, for an IF signal and (ii) between radio frequency (RF) and baseband, based on the second LO signal, for an RF signal. The frequency conversion circuit may perform frequency downconversion (i) from IF to baseband for a super-heterodyne receiver and (ii) from RF to baseband for a ZIF receiver. Alternatively or additionally, the frequency conversion circuit may perform frequency upconversion (i) from baseband to IF for a super-heterodyne transmitter and (ii) from baseband to RF for a ZIF transmitter.

The closest by its technical essence is in an international patent application WO/2015/183478 A1 disclosed reconfigurable multi-mode transceiver wherein a transceiver design is reconfigured using a plurality of frequency synthesizers and a plurality of carrier aggregation (CA) receiver (Rx) and transmitter (Tx) chains, the method including: connecting a first frequency synthesizer to a first CA Tx chain; connecting the plurality of frequency synthesizers to the plurality of CA Rx chains, wherein a second frequency synthesizer of the plurality of frequency synthesizers is connected as a shared synthesizer to a first CA Rx chain and a second CA Tx chain.

The presented invention implements integrated transceiver wherein an integrated transceiver design is reconfigured using a plurality of structurally identical frequency synthesizers (PLL), and a plurality of structurally identical Rx and structurally identical Tx chains, and a LO path distribution circuit, composed only of 1-to-2 signal splitter and 2-to-1 signal multiplexer circuits, that enables transceiver reconfigurable multi-mode support for different duplex and frequency conversion architectures. The LO path distribution network in the proposed integrated transceiver design allows the transceiver to be reconfigured for multi-mode architectures, such as direct (same as ZIF) or double frequency conversion architecture, both of which can work in either frequency division duplex (FDD) or time division duplex (TDD), a feature that is not presented in any of the reviewed patent applications. This feature provides the benefit of using a single integrated transceiver that can be configured to work as one or two independent multiple input multiple output (MIMO) transceivers in different duplex modes, using different frequency conversion architectures. When configured to a double frequency conversion architecture, the transceiver can operate at a higher carrier frequency compared to a direct conversion architecture at the expense of reduced transceiver chain count in FDD mode. Also, the proposed integrated transceiver design uses identical receive, transmit and PLL synthesiser components which simplifies transceiver radio design by unifying and reusing internal blocks and circuits.

### Summary of invention:

The present invention provides a novel multi-mode transceiver structure that presents a new level of versatility of transceiver reconfiguration for different operating modes and provides an LO distribution circuit that implements this functionality. The invention is defined by the features of the appended claims.

Other features that are considered as characteristic for the invention are listed in the claims.

Although the invention is described and illustrated herein as embodied in an integrated transceiver with LO distribution circuit, four PLL synthesizers, all of which enable reconfigurable multi-mode support for different duplex and frequency conversion architectures, nevertheless, it is not intended to be limited to the details shown, because different modifications and changes to the transceiver structure or the LO distribution circuit can be done without departing from the scope of the invention.

The structure, modes of operation, other aspects, inventive features, and advantages of the invention, will be best understood from the detailed description of specific embodiments set forth herein, together with the accompanying drawings.

### Brief description of the drawings:

Figure 1 shows the structure of the reconfigurable MIMO integrated transceiver.
Figure 2 shows the first receiver local oscillation signal distribution network circuit.
Figure 3 shows the second receiver local oscillation signal distribution network circuit.
Figure 4 shows the first transmitter local oscillation signal distribution network circuit.
Figure 5 shows the second transmitter local oscillation signal distribution network circuit.
Figure 6a shows the symbol of signal splitter.
Figure 6b shows signal splitter structure.
Figure 6c shows the circuit of signal splitter buffer.
Figure 7a shows the symbol of signal multiplexer.
Figure 7b shows the circuit of signal multiplexer.

### Detailed description:

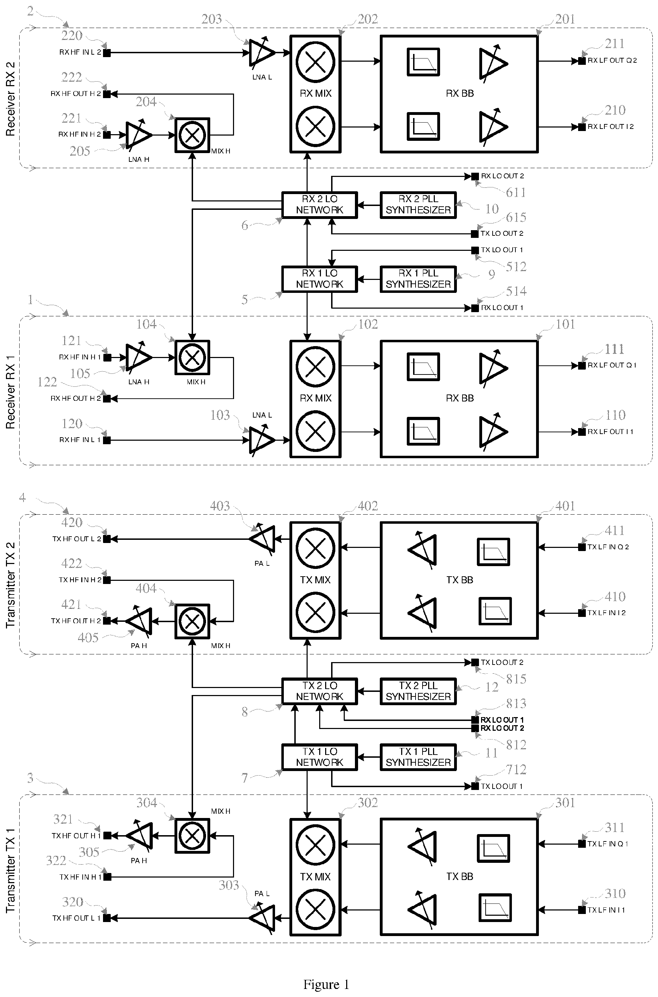

Figure 1 shows the structure of the reconfigurable multiple input multiple output (MIMO) wideband integrated transceiver. In accordance to the main embodiment of the invention, the transceiver is comprised of two structurally identical independently controlled receivers [1, 2], two structurally identical independently controlled transmitters [3, 4], four structurally identical independently controlled PLL synthesizers [9, 10, 11, 12] and a local oscillator (LO) distribution circuit, comprised of four structurally different LO signal distribution networks [5, 6, 7, 8], which is used to interconnect all of PLL synthesizers [9, 10, 11, 12] outputs to all receivers [1, 2] and transmitters [3, 4] LO inputs. In this patent document, the LO distribution circuit term refers to a component that is composed of all LO signal distribution networks [5, 6, 7, 8] present in the transceiver.

In accordance to the main embodiment of the invention, each receiver has two radio frequency (RF) inputs - lower frequency [120, 220] and higher frequency [121, 221] - each connected to an input of a low noise amplifier (LNA), which has programmable gain control functionality. The higher frequency LNA [105, 205] output is connected to a signal mixer [104, 204] input. Higher frequency signal mixer [104, 204] LO input is connected to one of the LO signal distribution networks [6] and its output routed to receiver higher frequency RF output [122, 222]. Higher frequency signal mixer [104, 204] is used to implement double frequency conversion receiver architecture, when its output is connected externally to the input of lower frequency LNA input [120, 220]. External connection allows adding external component with wanted functionally, for example intermediate frequency (IF) channel filters. Higher frequency signal mixer [104, 204] has the functionality to be bypassed, thus enabling the higher frequency LNA [105, 205] to be used as an input with additional signal amplification and gain control.

The lower frequency LNA [105, 205] is connected to a quadrature signal mixer [102, 202]. The quadrature mixer [102, 202] has an internal quadrature signal generator circuit, which input is connected to the LO signal distribution network [5, 6]. The quadrature mixer [102, 202] quadrature I and Q signal outputs are connected to the receiver quadrature baseband stage [101, 201]. The quadrature baseband stage [101, 201] is composed of channel selection filters and amplifier stages, which have controllable bandwidth and gain. The quadrature baseband stage [101, 201] low frequency I and Q signal outputs [110, 111, 210, 211] are connected to subsequent quadrature signal processing blocks, for example analog-to-digital converters (ADC) or other signal processing stages, whether they are analog, mixed signal, digital or combination of these.

In accordance to the main embodiment of the invention, each transmitter has two radio frequency (RF) outputs - lower frequency [320, 420] and higher frequency [321, 421] - each connected to an output of a power amplifier (PA) driver, which has programmable gain control functionality. The higher frequency PA [305, 405] input is connected to a signal mixer [304, 404] output. Higher frequency signal mixer [304, 304] LO input is connected to one of the LO signal distribution networks [8] and its input routed to transmitter higher frequency RF input [322, 422]. Higher frequency signal mixer [304, 304] is used to implement double frequency conversion transmitter architecture, when its input is connected externally to the output of lower frequency PA output [320, 420]. External connection allows adding external component with wanted functionally, for example intermediate frequency (IF) channel filters. Higher frequency signal mixer [304, 404] has the functionality to be bypassed, thus enabling the higher frequency PA [305, 405] to be used as an additional RF signal amplification and gain control stage.

The lower frequency PA [305, 405] is connected to a quadrature signal mixer [302, 402]. The quadrature mixer [302, 402] has an internal quadrature signal generator circuit, which input is connected to the LO signal distribution network [7, 8]. The quadrature mixer [302, 302] quadrature I and Q signal inputs are connected to the transmitter quadrature baseband stage [301, 401]. The quadrature baseband stage [301, 401] is composed of channel selection filters and amplifier stages, which have controllable bandwidth and gain. The quadrature baseband stage [301, 401] low frequency I and Q signal inputs [310, 311, 410, 411] are connected to prior quadrature signal processing blocks, for example digital-to-analog converters (DAC) or other signal processing stages, whether they are analog, mixed signal, digital or combination of these.

In accordance to the main embodiment of the invention, the integrated transceiver is also comprised of four structurally identical independently controlled PLL synthesizers [9, 10, 11, 12]. The PLL synthesizer local oscillator can be tuned at least from F_{PLL} to F_{PLL}/2, it also has the functionality to operate in integer-N and fractional-N mode. Furthermore, the PLL synthesizer has a 2*ⁿ* divider at its output, where *n* is an integer and is equal or greater than 0. Internal structure, reference signal source implementation of the PLL synthesizer is not in the scope of this patent document.

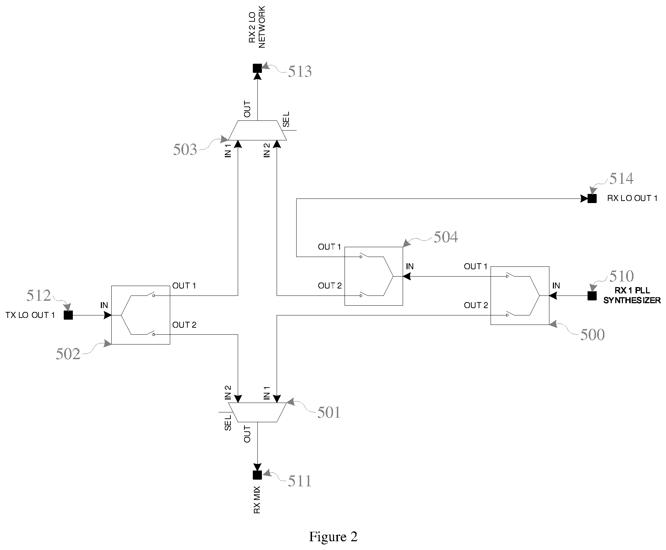

In accordance to the main embodiment of the invention, the local oscillator distribution circuit is composed of four local oscillation signal distribution networks [5, 6, 7, 8], shown respectively in Figure 2, Figure 3, Figure 4 and Figure 5. Two local oscillation signal distribution networks [5, 6] are receiver specific, each of which is connected to a PLL synthesizer [9, 10] and a receiver [1, 2]. Two local oscillation signal distribution networks [7, 8] are transmitter specific, each of which is connected to a PLL synthesizer [11, 12] and a transmitter [3, 4].

First receiver [1] local oscillation signal distribution network [5] is composed of three 1-to-2 signal splitter [500, 502, 504] and two 2-to-1 signal multiplexer [501, 503] circuits. It has two inputs [510, 512] - signal from first local oscillation signal PLL synthesizer [9] and first transmitter local oscillation signal distribution network [7], and that it has three outputs [511, 513, 514] - signal to first receiver quadrature mixer [102], second receiver local oscillation signal distribution network [6] and to second transmitter local oscillation signal distribution network [8]. First receiver local oscillation signal distribution network [5] structure is shown in Figure 2.

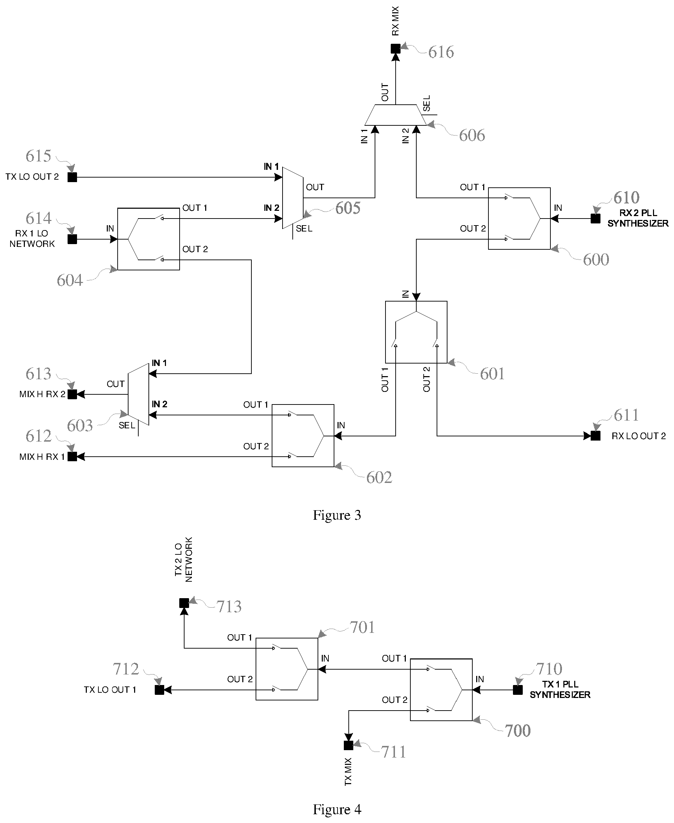

Second receiver [2] local oscillation signal distribution network [6] is composed of four 1-to-2 signal splitter [600, 601, 602, 604] and three 2-to-1 signal multiplexer [603, 605, 606] circuits. It has three inputs [610, 614, 615] - signal from second local oscillation signal PLL synthesizer [10], first receiver local oscillation signal distribution network [5] and second transmitter local oscillation signal distribution network [8], and that it has four outputs [611, 612, 613, 616] - signal to second transmitter local oscillation signal distribution network [8], to first and second receiver mixer [104, 204] and to second receiver quadrature mixer [202]. Second receiver local oscillation signal distribution network [6] structure is shown in Figure 3.

First transmitter [3] local oscillation signal distribution network [7] is composed of one 1-to-2 signal splitter [700] and one 2-to-1 signal multiplexer [701] circuits. It has one input [710] - signal from third local oscillation signal PLL synthesizer [11], and that it has three outputs [711, 712, 713] - signal to first transmitter quadrature mixer [302], to second transmitter local oscillation signal distribution network [8] and to first receiver local oscillation signal distribution network [5]. First transmitter local oscillation signal distribution network [7] structure is shown in Figure 4.

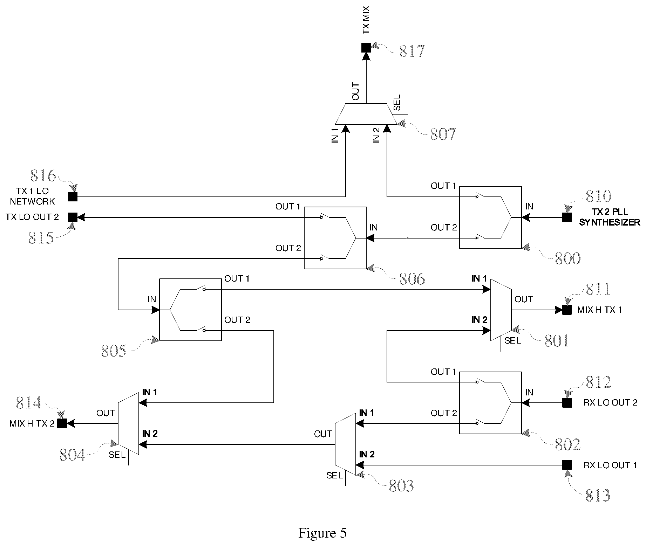

Second transmitter [4] local oscillation signal distribution network [8] is composed of four 1-to-2 signal splitter [800, 802, 805, 806] and four 2-to-1 signal multiplexer [801, 803, 804, 807] circuits. It has four inputs [810, 812, 813, 816] - signal from fourth local oscillation signal PLL synthesizer [12], second and first receiver local oscillation signal distribution network [5, 6] and first transmitter local oscillation signal distribution network [7], and that it has four outputs [811, 814, 815, 817] - signal to first and second transmitter mixer [304, 404], to second receiver local oscillation signal distribution network [6] and to second transmitter quadrature mixer [402]. Second transmitter local oscillation signal distribution network [8] structure is shown in Figure 5.

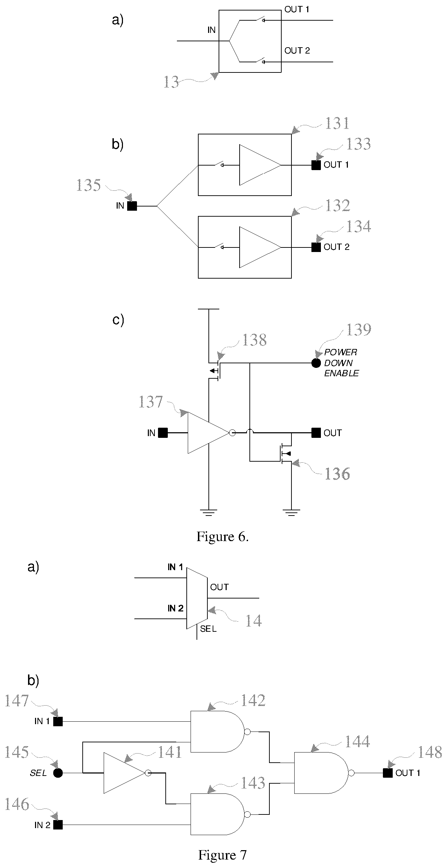

In accordance to the main embodiment of the invention, the local oscillation signal distribution networks are composed of interconnected 1-to-2 signal splitter [13] and 2-to-1 signal multiplexer circuits [14]. 1-to-2 signal splitter [13] is composed of two buffers [131, 132], which share the same signal input [135], but have two separate signal outputs [133, 134]. The buffer circuit [131, 132] is composed of an active buffer stage [137], has power down circuitry [138], power down enable control [139], which is also used to set the output level of the buffer [137] when it is powered down. The 1-to-2 signal splitter [13] symbol, structure and splitter buffer circuit is respectively shown in Figure 6a, Figure 6b and Figure 6c.

2-to-1 signal multiplexer [14] is composed of three NAND 2-to-1 circuits [142, 143, 144] and one inverter stage [141]. It has two signal inputs [146, 147], one signal output [148] and one input selection control [145]. The 2-to-1 signal multiplexer [14] symbol and circuit is respectively shown in Figure 7a and Figure 7b.

The use of 1-to-2 signal splitters [13] and 2-to-1 signal multiplexers [14] simplify transceiver radio design by unifying and reusing internal blocks and circuits, and even enables local oscillation signal distribution network design via digital synthesis.

In accordance to the main embodiment of the invention, different LO signal routing configurations in the LO distribution circuit can be programmed, that enable the presented transceiver to be configured for seven unique radio configurations:
1. Direct frequency conversion architecture that has two radio frequency independent transceivers chains, configured for frequency division duplex (FDD).
2. Direct frequency conversion architecture that has two by two MIMO transceiver chain, configured for FDD.
3. Double frequency conversion architecture that has at least two by two MIMO transceiver chain, configured for FDD.
4. Direct frequency conversion architecture that has two radio frequency independent transceivers chains, configured for time division duplex (TDD).
5. Direct frequency conversion architecture that has at least two by two MIMO transceiver chain, configured for TDD.
6. Double frequency conversion architecture that has two radio frequency independent transceivers chains, configured for TDD.
7. Double frequency conversion architecture that has at least two by two MIMO transceiver chain, configured for TDD.

The 1 radio configuration is achieved when the signal from first local oscillation signal PLL synthesizer [9] output is routed to the first receiver quadrature mixer [102] input via first receiver local oscillation signal distribution network [5], using LO signal path from [510] to [511]; and when the signal from second local oscillation signal PLL synthesizer [10] output is routed to the second receiver quadrature mixer [202] input via second receiver local oscillation signal distribution network [6], using LO signal path from [610] to [616]; and when the signal from third local oscillation signal PLL synthesizer [11] output is routed to the first transmitter quadrature mixer [302] input via first transmitter local oscillation signal distribution network [7], using LO signal path from [710] to [711]; and when the signal from fourth local oscillation signal PLL synthesizer [12] output is routed to the second transmitter quadrature mixer [402] input via second transmitter local oscillation signal distribution network [8], using LO signal path from [810] to [817].

The 2 radio configuration is achieved when the signal from first local oscillation signal PLL synthesizer [9] output is routed to the first and second receiver quadrature mixer [102, 202] input via first and second receiver local oscillation signal distribution networks [5, 6], using LO signal path from [510] to [511] and [511] to [513] in [5], [614] to [616] in [6]; and when the signal from third local oscillation signal PLL synthesizer [11] output is routed to the first and second transmitter quadrature mixer [302, 402] input via first and second transmitter local oscillation signal distribution networks [7, 8], using LO signal path from [710] to [711] and [713] in [7], [816] to [817] in [8].

The 3 radio configuration is achieved when the signal from first local oscillation signal PLL synthesizer [9] output is routed to the first and second receiver quadrature mixer [102, 202] inputs via first and second receiver local oscillation signal distribution networks [5, 6], using LO signal path from [510] to [511] and [511] to [513] in [5], [614] to [616] in [6]; and when the signal from second local oscillation signal PLL synthesizer [10] output is routed to the first and second receiver mixer [104, 204] inputs via second receiver local oscillation signal distribution networks [6], using LO signal path from [610] to [612] and [613] in [6]; and when the signal from third local oscillation signal PLL synthesizer [11] output is routed to the first and second transmitter quadrature mixer [302, 402] inputs via first and second transmitter local oscillation signal distribution networks [7, 8], using LO signal path from [710] to [711] and [713] in [7], and [816] to [817] in [8]; and when the signal from fourth local oscillation signal PLL synthesizer [12] output is routed to the first and second transmitter mixer [304, 404] inputs via second transmitter local oscillation signal distribution networks [8], using LO signal path from [810] to [811] and [814] in [8].

The 4 radio configuration is achieved when the signal from third local oscillation signal PLL synthesizer [11] output is routed to the first receiver quadrature mixer [102] input and first transmitter quadrature mixer [302] via first receiver local oscillation signal distribution network [5] and first transmitter local oscillation signal distribution network [7], using LO signal path from [512] to [511] in [5], [710] to [711] and [712] in [7]; when the signal from fourth local oscillation signal PLL synthesizer [12] output is routed to the second receiver quadrature mixer [202] input and second transmitter quadrature mixer [402] via second receiver local oscillation signal distribution network [6] and second transmitter local oscillation signal distribution network [8], using LO signal path from [615] to [616] in [6], [810] to [817] and [815] in [8].

The 5 radio configuration is achieved when the signal from third local oscillation signal PLL synthesizer [11] output is routed to all receiver and transmitter quadrature mixer [102, 202, 302, 402] inputs via all local oscillation signal distribution networks [5, 6, 7, 8], using LO signal path from [512] to [511] and [513] in [5], [614] to [616] in [6], [710] to all other outputs [711, 712, 713] in [7], [816] to [817] in [8].

The 6 radio configuration is achieved when the signal from first local oscillation signal PLL synthesizer [9] output is routed to the second receiver mixer [204] and second transmitter mixer [404] inputs via first and second receiver local oscillation signal distribution networks [5, 6] and second transmitter local oscillation signal distribution networks [8], using LO signal path from [510] to [513] and [514] in [5], [614] to [613] in [6], [813] to [814] in [8]; and when the signal from second local oscillation signal PLL synthesizer [10] output is routed to the first receiver mixer [104] and first transmitter mixer [304] inputs via second receiver local oscillation signal distribution network [6] and second transmitter local oscillation signal distribution network [8], using LO signal path from [610] to [611] and [612] in [6], [812] to [811] in [8]; and when the signal from third local oscillation signal PLL synthesizer [11] output is routed to the first receiver quadrature mixer [102] input and first transmitter quadrature mixer [302] via first receiver local oscillation signal distribution network [5] and first transmitter local oscillation signal distribution network [7], using LO signal path from [512] to [511] in [5], [710] to [711] and [712] in [7]; when the signal from fourth local oscillation signal PLL synthesizer [12] output is routed to the second receiver quadrature mixer [202] input and second transmitter quadrature mixer [402] via second receiver local oscillation signal distribution network [6] and second transmitter local oscillation signal distribution network [8], using LO signal path from [615] to [616] in [6], [810] to [816] and [817] in [8].

The 7 radio configuration is achieved when the signal from third local oscillation signal PLL synthesizer [11] output is routed to all receiver and transmitter quadrature mixer [102, 202, 302, 402] inputs via all local oscillation signal distribution networks [5, 6, 7, 8], using LO signal path from [512] to [511] and [513] in [5], [614] to [616] in [6], [710] to all other outputs [711, 712, 713] in [7], [816] to [817] in [8]; and when the signal from fourth local oscillation signal PLL synthesizer [12] output is routed to all receiver and transmitter mixer [104, 204, 304, 404] inputs via second receiver local oscillation signal distribution network [6] and second transmitter local oscillation signal distribution network [8], using LO signal path from [610] to [611], [612] and [613] in [6], [812] to [811] and [814] in [8].

In accordance to the main embodiment of the invention, the presented transceiver unique radio configurations can also be used to implement different transceiver functionality, for example, but not limited to, channel monitoring, Cartesian loop, signal retransmission, radio signal frequency shifting.

In accordance to another embodiment of the invention, additional receiver or transmitter blocks can be easily added for larger integrated MIMO transceiver solution, for example four-by-four MIMO, or independent two-by-two MIMO, since blocks can be reused. Additional receiver and transmitter LO inputs are connected to corresponding LO distribution network outputs or any buffer along the corresponding LO path. PLL synthesizer number, and LO distribution circuit structures does not need to change when adding additional receivers or transmitters to the transceiver structure.

In accordance to another embodiment of the invention, if at least one receiver LO inputs are connected to at least one transmitter LO input source outputs, the receiver can be used as an observation receiver for independent Cartesian loop implementation.

The terminology used herein is for the purpose of describing examples only and is not intended to be limiting of examples. Programmable, controllable can be used interchangeably and is meant to illustrate component control via any method available, both analog and digital. All analog signals herein are considered as differential signals, unless stated otherwise. Use of single ended signals does not change any feature mentioned in this patent document.

Although the embodiments described above are exemplary and for instructional purposes, specific structural and functional details disclosed in this patent document can have a much wider and general applicability and should not be limited to the embodiments described above.

## Claims

1. Integrated transceiver circuit that is composed of:
at least two structurally identical independently controlled receivers [1, 2] and at least two independently controlled local oscillation signal PLL synthesizers [9, 10] for each receiver [1, 2], and at least two interconnected receiver specific local oscillation signal distribution networks [5, 6], each of which is connected to a PLL synthesizer [9, 10] and a receiver [1, 2];
at least two structurally identical independently controlled transmitters [3, 4] and at least two independently controlled local oscillation signal PLL synthesizers [11, 12] for each transmitter [3, 4], and at least two interconnected transmitter specific local oscillation signal distribution networks [7, 8], each of which is connected to a PLL synthesizer [11, 12] and a transmitter [3, 4];
a local oscillation signal distribution circuit, which has four local oscillation signal distribution networks [5, 6, 7, 8] that are composed only of 1-to-2 signal splitter [13] and 2-to-1 signal multiplexer circuits [14];
at least one local oscillation signal distribution network [5] that is composed of three 1-to-2 signal splitter [500, 502, 504] and two 2-to-1 signal multiplexer [501, 503] circuits;
and that it has two inputs - signal from first local oscillation signal PLL synthesizer [9] and first transmitter local oscillation signal distribution network [7]; and that it has three outputs - signal to second receiver local oscillation signal distribution network [6], first receiver quadrature mixer [102] and to second transmitter local oscillation signal distribution network [8];
at least one local oscillation signal distribution network [6] that is composed of four 1-to-2 signal splitter [600, 601, 602, 604] and three 2-to-1 signal multiplexer [603, 605, 606] circuits; and that it has three inputs - signal from second local oscillation signal PLL synthesizer [10], first receiver local oscillation signal distribution network [5] and second transmitter local oscillation signal distribution network [8]; and that it has four outputs - signal to second receiver quadrature mixer [202], first and second receiver mixer [104, 204] and to second transmitter local oscillation signal distribution network [8];
at least one local oscillation signal distribution network [7] that is composed of one 1-to-2 signal splitter [700] and one 2-to-1 signal multiplexer [701] circuits; and that it has one input - signal from third local oscillation signal PLL synthesizer [11]; and that it has three outputs - signal to second transmitter local oscillation signal distribution network [8], first transmitter quadrature mixer [302] and to first receiver local oscillation signal distribution network [5];
at least one local oscillation signal distribution network [8] that is composed of four 1-to-2 signal splitter [800, 802, 805, 806] and four 2-to-1 signal multiplexer [801, 803, 804, 807] circuits; and that it has four inputs - signal from fourth local oscillation signal PLL synthesizer [12], first and second receiver local oscillation signal distribution network [5, 6] and first transmitter local oscillation signal distribution network [7]; and that it has four outputs - signal to second transmitter quadrature mixer [402], first and second transmitter mixer [304, 404] and to second receiver local oscillation signal distribution network [6].

2. Integrated transceiver circuit of claim 1, wherein each one of its receivers [1, 2] has at least two radio frequency inputs with low noise amplification stages, at least one of which is directly connected to a quadrature mixer [102, 202] input, which in turn is connected to a quadrature baseband stage, composed of channel selection filters and amplifier stages [101, 201]; and that at least one of its high frequency input low noise amplifier [105, 205] output is connected to a mixer [104, 204], that can be bypassed, and which output can be externally connected to another low noise amplifier [103, 203] input via external connection; and that the mixer [104, 204] local oscillator signal input is connected to one of the receiver specific local oscillator distribution network [6] outputs; and that the quadrature mixer [102, 202] quadrature signal generator input is connected to one of the receiver specific local oscillator distribution network outputs [5, 6]; and that the receiver quadrature baseband stage channel selection filter bandwidth and amplifier gain is controllable.

3. Integrated transceiver circuit of claim 1, wherein each one of its transmitters [3, 4] has at least two high frequency outputs with amplification stages, at least one of which is directly connected to a quadrature mixer [302, 402] output, which in turn is connected to a quadrature baseband stage, composed of channel selection filters and amplifier stages [301, 401]; and that at least one of the radio frequency power amplifier [303, 403] output can be externally connected to a mixer [304, 404], that can be bypassed, and which output is connected to an additional power amplifier input [305, 405]; and that the mixer [304, 404] local oscillator signal input is connected to one of the transmitter specific local oscillator distribution network [8] outputs; and that the quadrature mixer [302, 402] quadrature signal generator input is connected to one of the transmitter specific local oscillator distribution network outputs [7, 8]; and that the transmitter quadrature baseband stage channel selection filter bandwidth and amplifier gain is controllable.

4. Integrated transceiver circuit of claim 1, wherein all of its local oscillation signal PLL synthesizers are structurally identical, independently controlled and produce a local oscillation signal of a frequency F_{PLL}, where the local oscillator can be tuned at least from the frequency F_{PLL} to F_{PLL}/2, the PLL synthesizer can operate in integer-N and fractional-N mode, and has a 2*ⁿ* divider at its output, where n is an integer and is equal or greater than 0.

5. Integrated transceiver circuit of claim 1, wherein when the signal from first local oscillation signal PLL synthesizer [9] output is routed to the first receiver quadrature mixer [102] input via first receiver local oscillation signal distribution network [5]; and when the signal from second local oscillation signal PLL synthesizer [10] output is routed to the second receiver quadrature mixer [202] input via second receiver local oscillation signal distribution network [6]; and when the signal from third local oscillation signal PLL synthesizer [11] output is routed to the first transmitter quadrature mixer [302] input via first transmitter local oscillation signal distribution network [7]; and when the signal from fourth local oscillation signal PLL synthesizer [12] output is routed to the second transmitter quadrature mixer [402] input via second transmitter local oscillation signal distribution network [8], it implements a **direct frequency conversion architecture** that has **two radio frequency independent transceivers chains,** configured for **frequency division duplex** in the integrated transceiver circuit of claim 1.

6. Integrated transceiver circuit of claim 1, wherein when the signal from first local oscillation signal PLL synthesizer [9] output is routed to the first and second receiver quadrature mixer [102, 202] input via first and second receiver local oscillation signal distribution networks [5, 6]; and when the signal from third local oscillation signal PLL synthesizer [11] output is routed to the first and second transmitter quadrature mixer [302, 402] input via first and second transmitter local oscillation signal distribution networks [7, 8], it implements a **direct frequency conversion architecture** that has **at least two by two multiple input multiple output transceiver chain,** configured for **frequency division duplex** in the integrated transceiver circuit of claim 1.

7. Integrated transceiver circuit of claim 1, wherein when the signal from first local oscillation signal PLL synthesizer [9] output is routed to the first and second receiver quadrature mixer [102, 202] inputs via first and second receiver local oscillation signal distribution networks [5, 6]; and when the signal from second local oscillation signal PLL synthesizer [10] output is routed to the first and second receiver mixer [104, 204] inputs via second receiver local oscillation signal distribution networks [6]; and when the signal from third local oscillation signal PLL synthesizer [11] output is routed to the first and second transmitter quadrature mixer [302, 402] inputs via first and second transmitter local oscillation signal distribution networks [7, 8]; and when the signal from fourth local oscillation signal PLL synthesizer [12] output is routed to the first and second transmitter mixer [304, 404] inputs via second transmitter local oscillation signal distribution networks [8], it implements a **double frequency conversion architecture** that is configured to extend the radio frequency range of transceiver by the frequency F_{PLL} and has **at least two by two multiple input multiple output transceiver chain,** configured for **frequency division duplex** in the integrated transceiver circuit of claim 1.

8. Integrated transceiver circuit of claim 1, wherein when the signal from third local oscillation signal PLL synthesizer [11] output is routed to the first receiver quadrature mixer [102] input and first transmitter quadrature mixer [302] input via first receiver local oscillation signal distribution network [5] and first transmitter local oscillation signal distribution network [7]; when the signal from fourth local oscillation signal PLL synthesizer [12] output is routed to the second receiver quadrature mixer [202] input and second transmitter quadrature mixer [402] input via second receiver local oscillation signal distribution network [6] and second transmitter local oscillation signal distribution network [8], it implements a **direct frequency conversion architecture** that has **two radio frequency independent transceivers chains,** configured **for time division duplex** in the integrated transceiver circuit of claim 1.

9. Integrated transceiver circuit of claim 1, wherein when the signal from third local oscillation signal PLL synthesizer [11] output is routed to all receiver and transmitter quadrature mixer [102, 202, 302, 402] inputs via all local oscillation signal distribution networks [5, 6, 7, 8], it implements a **direct frequency conversion architecture** that has **at least two by two multiple input multiple output transceiver chain,** configured for **time division duplex** in the integrated transceiver circuit of claim 1.

10. Integrated transceiver circuit of claim 1, wherein when the signal from first local oscillation signal PLL synthesizer [9] output is routed to the second receiver mixer [204] and second transmitter mixer [404] inputs via first and second receiver local oscillation signal distribution networks [5, 6] and second transmitter local oscillation signal distribution networks [8]; and when the signal from second local oscillation signal PLL synthesizer [10] output is routed to the first receiver mixer [104] and first transmitter mixer [304] inputs via second receiver local oscillation signal distribution network [6] and second transmitter local oscillation signal distribution network [8]; and when the signal from third local oscillation signal PLL synthesizer [11] output is routed to the first receiver quadrature mixer [102] input and first transmitter quadrature mixer [302] input via first receiver local oscillation signal distribution network [5] and first transmitter local oscillation signal distribution network [7]; when the signal from fourth local oscillation signal PLL synthesizer [12] output is routed to the second receiver quadrature mixer [202] input and second transmitter quadrature mixer [402] via second receiver local oscillation signal distribution network [6] and second transmitter local oscillation signal distribution network [8], it implements a **double frequency conversion architecture** that is configured to extend the radio frequency range of transceiver by the frequency F_{PLL} and has **two radio frequency independent transceivers chains,** configured for **time division duplex** in the integrated transceiver circuit of claim 1.

11. Integrated transceiver circuit of claim 1, wherein when the signal from third local oscillation signal PLL synthesizer [11] output is routed to all receiver and transmitter quadrature mixer [102, 202, 302, 402] inputs via all local oscillation signal distribution networks [5, 6, 7, 8]; and when the signal from fourth local oscillation signal PLL synthesizer [12] output is routed to all receiver and transmitter mixer [104, 204, 304, 404] inputs via second receiver local oscillation signal distribution network [6] and second transmitter local oscillation signal distribution network [8], it implements a **double frequency conversion architecture** that is configured to extend the radio frequency range of transceiver by the frequency F_{PLL} and has **at least two by two multiple input multiple output transceiver chain,** configured for **time division duplex** in the integrated transceiver circuit of claim 1.

## Patentansprüche

1. Integrierte Sender-Empfänger-Schaltung, umfassend:
mindestens zwei strukturell identische, unabhängig gesteuerte Empfänger [1, 2] und jeweils mindestens zwei unabhängig gesteuerte PLL-Synthesizer für lokale Oszillatorsignale [9, 10] pro Empfänger [1, 2] sowie mindestens zwei miteinander verbundene, empfängerbezogene Verteilernetze für lokale Oszillatorsignale [5, 6], von denen jedes mit einem PLL-Synthesizer [9, 10] und einem Empfänger [1, 2] verbunden ist;
mindestens zwei strukturell identische, unabhängig gesteuerte Sender [3, 4] und jeweils mindestens zwei unabhängig gesteuerte PLL-Synthesizer für lokale Oszillatorsignale [11, 12] pro Sender [3, 4] sowie mindestens zwei miteinander verbundene, senderbezogene Verteilernetze für lokale Oszillatorsignale [7, 8], von denen jedes mit einem PLL-Synthesizer [11, 12] und einem Sender [3, 4] verbunden ist;
eine Verteilungsschaltung für lokale Oszillatorsignale, die vier Verteilernetze für lokale Oszillatorsignale [5, 6, 7, 8] umfasst, die ausschließlich aus 1-zu-2-Signalteilern [13] und 2-zu-1-Signalmultiplexerschaltungen [14] bestehen;
mindestens ein Verteilernetz für lokale Oszillatorsignale [5], das aus drei 1-zu-2-Signalteilern [500, 502, 504] und zwei 2-zu-1-Signalmultiplexern [501, 503] besteht, mit zwei Eingängen - einem Signal vom ersten PLL-Synthesizer [9] und einem Signal vom ersten senderbezogenen Verteilernetz [7]; und drei Ausgängen - einem Signal zum zweiten empfängerbezogenen Verteilernetz [6], einem Signal zum Quadraturmischer des ersten Empfängers [102] und einem Signal zum zweiten senderbezogenen Verteilernetz [8];
mindestens ein Verteilernetz für lokale Oszillatorsignale [6], das aus vier 1-zu-2-Signalteilern [600, 601, 602, 604] und drei 2-zu-1-Signalmultiplexern [603, 605, 606] besteht, mit drei Eingängen - einem Signal vom zweiten PLL-Synthesizer [10], einem Signal vom ersten empfängerbezogenen Verteilernetz [5] und einem Signal vom zweiten senderbezogenen Verteilernetz [8]; und vier Ausgängen - einem Signal zum Quadraturmischer des zweiten Empfängers [202], Signalen zu den Mischern des ersten und zweiten Empfängers [104, 204] sowie einem weiteren Signal zum zweiten senderbezogenen Verteilernetz [8];
mindestens ein Verteilernetz für lokale Oszillatorsignale [7], das aus einem 1-zu-2-Signalteiler [700] und einem 2-zu-1-Signalmultiplexer [701] besteht, mit einem Eingang - einem Signal vom dritten PLL-Synthesizer [11]; und drei Ausgängen - einem Signal zum zweiten senderbezogenen Verteilernetz [8], einem Signal zum Quadraturmischer des ersten Senders [302] und einem weiteren Signal zum ersten empfängerbezogenen Verteilernetz [5];
mindestens ein Verteilernetz für lokale Oszillatorsignale [8], das aus vier 1-zu-2-Signalteilern [800, 802, 805, 806] und vier 2-zu-1-Signalmultiplexern [801, 803, 804, 807] besteht, mit vier Eingängen - einem Signal vom vierten PLL-Synthesizer [12], Signalen von den ersten und zweiten empfängerbezogenen Verteilernetzen [5, 6] sowie einem Signal vom ersten senderbezogenen Verteilernetz [7]; und vier Ausgängen - einem Signal zum Quadraturmischer des zweiten Senders [402], Signalen zu den Mischern des ersten und zweiten Senders [304, 404] sowie einem weiteren Signal zum zweiten empfängerbezogenen Verteilernetz [6].

2. Integrierte Sender-Empfänger-Schaltung nach Anspruch 1, wobei jeder der Empfänger [1, 2] mindestens zwei Hochfrequenzeingänge mit Rauschverstärkerstufen aufweist, von denen mindestens einer direkt mit einem Eingang eines Quadraturmischers [102, 202] verbunden ist, welcher seinerseits mit einer Quadratur-Basisbandstufe, bestehend aus Kanalwahlfiltern und Verstärkerstufen [101, 201], verbunden ist; und wobei mindestens ein Ausgang eines Hochfrequenz-Rauschverstärkers [105, 205] mit einem Mischer [104, 204] verbunden ist, der umgehbar ist und dessen Ausgang extern mit einem Eingang eines weiteren Rauschverstärkers [103, 203] verbunden werden kann; und wobei der LO-Signaleingang des Mischers [104, 204] mit einem Ausgang eines empfängerbezogenen lokalen Oszillator-Verteilernetzes [6] verbunden ist; und der Eingang des Quadratursignalgenerators des Quadraturmischers [102, 202] mit einem Ausgang eines empfängerbezogenen lokalen Oszillator-Verteilernetzes [5, 6] verbunden ist; und wobei die Bandbreite des Kanalwahlfilters und die Verstärkung der Verstärkerstufe der Quadratur-Basisbandstufe des Empfängers steuerbar ist.

3. Integrierte Sender-Empfänger-Schaltung nach Anspruch 1, wobei jeder der Sender [3, 4] mindestens zwei Hochfrequenzausgänge mit Verstärkerstufen aufweist, von denen mindestens einer direkt mit einem Ausgang eines Quadraturmischers [302, 402] verbunden ist, welcher seinerseits mit einer Quadratur-Basisbandstufe, bestehend aus Kanalwahlfiltern und Verstärkerstufen [301, 401], verbunden ist; und wobei mindestens ein Ausgang eines Hochfrequenz-Leistungsverstärkers [303, 403] extern mit einem Mischer [304, 404] verbunden werden kann, der umgehbar ist und dessen Ausgang mit einem Eingang eines zusätzlichen Leistungsverstärkers [305, 405] verbunden ist; und wobei der LO-Signaleingang des Mischers [304, 404] mit einem Ausgang eines senderbezogenen lokalen Oszillator-Verteilernetzes [8] verbunden ist; und der Eingang des Quadratursignalgenerators des Quadraturmischers [302, 402] mit einem Ausgang eines senderbezogenen lokalen Oszillator-Verteilernetzes [7, 8] verbunden ist; und wobei die Bandbreite des Kanalwahlfilters und die Verstärkung der Verstärkerstufe der Quadratur-Basisbandstufe des Senders steuerbar ist.

4. Integrierte Sender-Empfänger-Schaltung nach Anspruch 1, wobei alle PLL-Synthesizer für lokale Oszillatorsignale strukturmäßig identisch und unabhängig steuerbar sind und ein lokales Oszillatorsignal mit einer Frequenz F_{PLL} erzeugen, wobei der lokale Oszillator mindestens im Bereich von F_{PLL} bis F_{PLL}/2 abstimmbar ist, der PLL-Synthesizer sowohl im Ganzzahlmodus (Integer-N) als auch im gebrochenen Modus (Fractional-N) arbeiten kann und am Ausgang einen 2ⁿ -Teiler aufweist, wobei n eine ganze Zahl ist, die größer oder gleich 0 ist.

5. Integrierte Sender-Empfänger-Schaltung nach Anspruch 1, wobei wenn das Signal von dem Ausgang des ersten PLL-Synthesizers für lokale Oszillatorsignale [9] zur Eingabe des ersten Quadraturmischers des Empfängers [102] über das erste empfängerbezogene Verteilernetz für lokale Oszillatorsignale [5] geleitet wird; und wenn das Signal von dem Ausgang des zweiten PLL-Synthesizers für lokale Oszillatorsignale [10] zur Eingabe des zweiten Quadraturmischers des Empfängers [202] über das zweite empfängerbezogene Verteilernetz für lokale Oszillatorsignale [6] geleitet wird; und wenn das Signal von dem Ausgang des dritten PLL-Synthesizers für lokale Oszillatorsignale [11] zur Eingabe des ersten Quadraturmischers des Senders [302] über das erste senderbezogene Verteilernetz für lokale Oszillatorsignale [7] geleitet wird; und wenn das Signal von dem Ausgang des vierten PLL-Synthesizers für lokale Oszillatorsignale [12] zur Eingabe des zweiten Quadraturmischers des Senders [402] über das zweite senderbezogene Verteilernetz für lokale Oszillatorsignale [8] geleitet wird, es eine Architektur zur direkten Frequenzumsetzung implementiert, die zwei voneinander unabhängige Hochfrequenz-Sender-Empfänger-Ketten umfasst, konfiguriert für Frequenzduplexbetrieb in der integrierten Sender-Empfänger-Schaltung nach Anspruch 1.

6. Integrierte Sender-Empfänger-Schaltung nach Anspruch 1, wobei wenn das Signal von dem Ausgang des ersten PLL-Synthesizers für lokale Oszillatorsignale [9] zur Eingabe der ersten und zweiten Quadraturmischer der Empfänger [102, 202] über die ersten und zweiten empfängerbezogenen Verteilernetze für lokale Oszillatorsignale [5, 6] geleitet wird; und wenn das Signal von dem Ausgang des dritten PLL-Synthesizers für lokale Oszillatorsignale [11] zur Eingabe der ersten und zweiten Quadraturmischer der Sender [302, 402] über die ersten und zweiten senderbezogenen Verteilernetze für lokale Oszillatorsignale [7, 8] geleitet wird, es eine Architektur zur direkten Frequenzumsetzung implementiert, die mindestens eine Zwei-zu-Zwei-Mehrfach-Eingangs-Mehrfach-Ausgang-Sender-Empfänger-Kette umfasst, konfiguriert für Frequenzduplexbetrieb in der integrierten Sender-Empfänger-Schaltung nach Anspruch 1.

7. Integrierte Sender-Empfänger-Schaltung nach Anspruch 1, wobei wenn das Signal von dem Ausgang des ersten PLL-Synthesizers für lokale Oszillatorsignale [9] zu den Eingängen der ersten und zweiten Quadraturmischer der Empfänger [102, 202] über die ersten und zweiten empfängerbezogenen Verteilernetze für lokale Oszillatorsignale [5, 6] geleitet wird; und wenn das Signal von dem Ausgang des zweiten PLL-Synthesizers für lokale Oszillatorsignale [10] zu den Eingängen der ersten und zweiten Mischer der Empfänger [104, 204] über das zweite empfängerbezogene Verteilernetz für lokale Oszillatorsignale [6] geleitet wird; und wenn das Signal von dem Ausgang des dritten PLL-Synthesizers für lokale Oszillatorsignale [11] zu den Eingängen der ersten und zweiten Quadraturmischer der Sender [302, 402] über die ersten und zweiten senderbezogenen Verteilernetze für lokale Oszillatorsignale [7, 8] geleitet wird; und wenn das Signal von dem Ausgang des vierten PLL-Synthesizers für lokale Oszillatorsignale [12] zu den Eingängen der ersten und zweiten Mischer der Sender [304, 404] über das zweite senderbezogene Verteilernetz für lokale Oszillatorsignale [8] geleitet wird, es eine Architektur zur doppelten Frequenzumsetzung implementiert, die dazu konfiguriert ist, den Hochfrequenzbereich des Sender-Empfängers um die Frequenz F_{PLL} zu erweitern, und mindestens eine Zwei-zu-Zwei-Mehrfach-Eingangs-Mehrfach-Ausgang-Sender-Empfänger-Kette umfasst, konfiguriert für Frequenzduplexbetrieb in der integrierten Sender-Empfänger-Schaltung nach Anspruch 1.

8. Integrierte Sender-Empfänger-Schaltung nach Anspruch 1, wobei wenn das Signal von dem Ausgang des dritten PLL-Synthesizers für lokale Oszillatorsignale [11] zur Eingabe des ersten Quadraturmischers des Empfängers [102] und zur Eingabe des ersten Quadraturmischers des Senders [302] über das erste empfängerbezogene Verteilernetz für lokale Oszillatorsignale [5] und das erste senderbezogene Verteilernetz für lokale Oszillatorsignale [7] geleitet wird; wenn das Signal von dem Ausgang des vierten PLL-Synthesizers für lokale Oszillatorsignale [12] zur Eingabe des zweiten Quadraturmischers des Empfängers [202] und zur Eingabe des zweiten Quadraturmischers des Senders [402] über das zweite empfängerbezogene Verteilernetz für lokale Oszillatorsignale [6] und das zweite senderbezogene Verteilernetz für lokale Oszillatorsignale [8] geleitet wird, es eine Architektur zur direkten Frequenzumsetzung implementiert, die zwei voneinander unabhängige Hochfrequenz-Sender-Empfänger-Ketten umfasst, konfiguriert für Zeitduplexbetrieb in der integrierten Sender-Empfänger-Schaltung nach Anspruch 1.

9. Integrierte Sender-Empfänger-Schaltung nach Anspruch 1, wobei wenn das Signal von dem Ausgang des dritten PLL-Synthesizers für lokale Oszillatorsignale [11] zu allen Eingängen der Quadraturmischer der Empfänger und Sender [102, 202, 302, 402] über alle Verteilernetze für lokale Oszillatorsignale [5, 6, 7, 8] geleitet wird, es eine Architektur zur direkten Frequenzumsetzung implementiert, die mindestens eine Zwei-zu-Zwei-Mehrfach-Eingangs-Mehrfach-Ausgang-Sender-Empfänger-Kette umfasst, konfiguriert für Zeitduplexbetrieb in der integrierten Sender-Empfänger-Schaltung nach Anspruch 1.

10. Integrierte Sender-Empfänger-Schaltung nach Anspruch 1, wobei wenn das Signal von dem Ausgang des ersten PLL-Synthesizers für lokale Oszillatorsignale [9] zu den Eingängen des zweiten Mischers des Empfängers [204] und des zweiten Mischers des Senders [404] über die ersten und zweiten empfängerbezogenen Verteilernetze für lokale Oszillatorsignale [5, 6] und das zweite senderbezogene Verteilernetz für lokale Oszillatorsignale [8] geleitet wird; und wenn das Signal von dem Ausgang des zweiten PLL-Synthesizers für lokale Oszillatorsignale [10] zu den Eingängen des ersten Mischers des Empfängers [104] und des ersten Mischers des Senders [304] über das zweite empfängerbezogene Verteilernetz für lokale Oszillatorsignale [6] und das zweite senderbezogene Verteilernetz für lokale Oszillatorsignale [8] geleitet wird; und wenn das Signal von dem Ausgang des dritten PLL-Synthesizers für lokale Oszillatorsignale [11] zur Eingabe des ersten Quadraturmischers des Empfängers [102] und des ersten Quadraturmischers des Senders [302] über das erste empfängerbezogene Verteilernetz für lokale Oszillatorsignale [5] und das erste senderbezogene Verteilernetz für lokale Oszillatorsignale [7] geleitet wird; wenn das Signal von dem Ausgang des vierten PLL-Synthesizers für lokale Oszillatorsignale [12] zur Eingabe des zweiten Quadraturmischers des Empfängers [202] und des zweiten Quadraturmischers des Senders [402] über das zweite empfängerbezogene Verteilernetz für lokale Oszillatorsignale [6] und das zweite senderbezogene Verteilernetz für lokale Oszillatorsignale [8] geleitet wird, es eine Architektur zur doppelten Frequenzumsetzung implementiert, die dazu konfiguriert ist, den Hochfrequenzbereich des Sender-Empfängers um die Frequenz F_{PLL} zu erweitern, und zwei voneinander unabhängige Hochfrequenz-Sender-Empfänger-Ketten umfasst, konfiguriert für Zeitduplexbetrieb in der integrierten Sender-Empfänger-Schaltung nach Anspruch 1.

11. Integrierte Sender-Empfänger-Schaltung nach Anspruch 1, wobei wenn das Signal von dem Ausgang des dritten PLL-Synthesizers für lokale Oszillatorsignale [11] zu allen Eingängen der Quadraturmischer der Empfänger und Sender [102, 202, 302, 402] über alle Verteilernetze für lokale Oszillatorsignale [5, 6, 7, 8] geleitet wird; und wenn das Signal von dem Ausgang des vierten PLL-Synthesizers für lokale Oszillatorsignale [12] zu allen Eingängen der Mischer der Empfänger und Sender [104, 204, 304, 404] über das zweite empfängerbezogene Verteilernetz für lokale Oszillatorsignale [6] und das zweite senderbezogene Verteilernetz für lokale Oszillatorsignale [8] geleitet wird, es eine Architektur zur doppelten Frequenzumsetzung implementiert, die dazu konfiguriert ist, den Hochfrequenzbereich des Sender-Empfängers um die Frequenz F_{PLL} zu erweitern, und mindestens eine Zwei-zu-Zwei-Mehrfach-Eingangs-Mehrfach-Ausgang-Sender-Empfänger-Kette umfasst, konfiguriert für Zeitduplexbetrieb in der integrierten Sender-Empfänger-Schaltung nach Anspruch 1.

## Revendications

1. Circuit d'émetteur-récepteur intégré, comprenant:
au moins deux récepteurs [1, 2] structurellement identiques et commandés de manière indépendante, et au moins deux synthétiseurs PLL de signal d'oscillateur local [9, 10] commandés de manière indépendante pour chaque récepteur [1, 2], et au moins deux réseaux de distribution de signal d'oscillateur local spécifiques aux récepteurs [5, 6], interconnectés, chacun étant connecté à un synthétiseur PLL [9, 10] et à un récepteur [1, 2];
au moins deux émetteurs [3, 4] structurellement identiques et commandés de manière indépendante, et au moins deux synthétiseurs PLL de signal d'oscillateur local [11, 12] commandés de manière indépendante pour chaque émetteur [3, 4],
et au moins deux réseaux de distribution de signal d'oscillateur local spécifiques aux émetteurs [7, 8], interconnectés, chacun étant connecté à un synthétiseur PLL [11, 12] et à un émetteur [3, 4];
un circuit de distribution de signal d'oscillateur local, comprenant quatre réseaux de distribution de signal d'oscillateur local [5, 6, 7, 8] constitués uniquement de circuits diviseurs de signal 1-vers-2 [13] et de circuits multiplexeurs de signal 2-vers-1 [14];
au moins un réseau de distribution de signal d'oscillateur local [5], comprenant trois diviseurs de signal 1-vers-2 [500, 502, 504] et deux multiplexeurs de signal 2-vers-1 [501, 503]; et comportant deux entrées - un signal provenant du premier synthétiseur PLL de signal d'oscillateur local [9] et un signal provenant du premier réseau de distribution de signal d'oscillateur local de l'émetteur [7]; et
comportant trois sorties - un signal vers le deuxième réseau de distribution de signal d'oscillateur local du récepteur [6], un signal vers le mélangeur en quadrature du premier récepteur [102] et un signal vers le deuxième réseau de distribution de signal d'oscillateur local de l'émetteur [8];
au moins un réseau de distribution de signal d'oscillateur local [6], comprenant quatre diviseurs de signal 1-vers-2 [600, 601, 602, 604] et trois multiplexeurs de signal 2-vers-1 [603, 605, 606]; et comportant trois entrées - un signal provenant du deuxième synthétiseur PLL de signal d'oscillateur local [10], un signal provenant du premier réseau de distribution de signal d'oscillateur local du récepteur [5] et un signal provenant du deuxième réseau de distribution de signal d'oscillateur local de l'émetteur [8]; et comportant quatre sorties - un signal vers le mélangeur en quadrature du deuxième récepteur [202], un signal vers les mélangeurs du premier et du deuxième récepteur [104, 204] et un signal vers le deuxième réseau de distribution de signal d'oscillateur local de l'émetteur [8];
au moins un réseau de distribution de signal d'oscillateur local [7], comprenant un diviseur de signal 1-vers-2 [700] et un multiplexeur de signal 2-vers-1 [701];
et comportant une entrée - un signal provenant du troisième synthétiseur PLL de signal d'oscillateur local [11]; et comportant trois sorties - un signal vers le deuxième réseau de distribution de signal d'oscillateur local de l'émetteur [8], un signal vers le mélangeur en quadrature du premier émetteur [302] et un signal vers le premier réseau de distribution de signal d'oscillateur local du récepteur [5];
au moins un réseau de distribution de signal d'oscillateur local [8], comprenant quatre diviseurs de signal 1-vers-2 [800, 802, 805, 806] et quatre multiplexeurs de signal 2-vers-1 [801, 803, 804, 807]; et comportant quatre entrées - un signal provenant du quatrième synthétiseur PLL de signal d'oscillateur local [12], un signal provenant des premier et deuxième réseaux de distribution de signal d'oscillateur local des récepteurs [5, 6] et un signal provenant du premier réseau de distribution de signal d'oscillateur local de l'émetteur [7]; et comportant quatre sorties - un signal vers le mélangeur en quadrature du deuxième émetteur [402], un signal vers les mélangeurs du premier et du deuxième émetteur [304, 404] et un signal vers le deuxième réseau de distribution de signal d'oscillateur local du récepteur [6].

2. Circuit d'émetteur-récepteur intégré selon la revendication 1, dans lequel chacun des récepteurs [1, 2] comprend au moins deux entrées de fréquence radio avec des étages d'amplification à faible bruit, dont au moins une est directement connectée à une entrée d'un mélangeur en quadrature [102, 202], lequel est à son tour connecté à un étage de bande de base en quadrature, comprenant des filtres de sélection de canal et des étages d'amplification [101, 201]; et dans lequel au moins une sortie d'amplificateur à faible bruit à haute fréquence [105, 205] est connectée à un mélangeur [104, 204], qui peut être contourné, et dont la sortie peut être connectée extérieurement à une entrée d'un autre amplificateur à faible bruit [103, 203] via une connexion externe; et dans lequel l'entrée de signal d'oscillateur local du mélangeur [104, 204] est connectée à l'une des sorties d'un réseau de distribution de signal d'oscillateur local spécifique aux récepteurs [6]; et dans lequel l'entrée du générateur de signal en quadrature du mélangeur en quadrature [102, 202] est connectée à l'une des sorties d'un réseau de distribution de signal d'oscillateur local spécifique aux récepteurs [5, 6]; et dans lequel la bande passante du filtre de sélection de canal et le gain de l'amplificateur de l'étage de bande de base en quadrature du récepteur sont commandables.

3. Circuit d'émetteur-récepteur intégré selon la revendication 1, dans lequel chacun des émetteurs [3, 4] comprend au moins deux sorties haute fréquence avec des étages d'amplification, dont au moins une est directement connectée à une sortie de mélangeur en quadrature [302, 402], lequel est à son tour connecté à un étage de bande de base en quadrature, comprenant des filtres de sélection de canal et des étages d'amplification [301, 401]; et dans lequel au moins une sortie d'amplificateur de puissance radiofréquence [303, 403] peut être connectée extérieurement à un mélangeur [304, 404], lequel peut être contourné, et dont la sortie est connectée à une entrée supplémentaire d'amplificateur de puissance [305, 405]; et dans lequel l'entrée de signal d'oscillateur local du mélangeur [304, 404] est connectée à l'une des sorties d'un réseau de distribution de signal d'oscillateur local spécifique aux émetteurs [8]; et dans lequel l'entrée du générateur de signal en quadrature du mélangeur en quadrature [302, 402] est connectée à l'une des sorties d'un réseau de distribution de signal d'oscillateur local spécifique aux émetteurs [7, 8]; et dans lequel la bande passante du filtre de sélection de canal et le gain de l'amplificateur de l'étage de bande de base en quadrature de l'émetteur sont commandables.

4. Circuit d'émetteur-récepteur intégré selon la revendication 1, dans lequel tous les synthétiseurs PLL de signal d'oscillateur local sont structurellement identiques, commandés de manière indépendante, et produisent un signal d'oscillateur local de fréquence F_{PLL}, l'oscillateur local pouvant être accordé au moins de la fréquence F_{PLL} jusqu'à F_{PLL}/2, le synthétiseur PLL étant configuré pour fonctionner en mode entier-N et en mode fractionnaire-N, et comportant un diviseur 2ⁿ en sortie, où n est un entier supérieur ou égal à 0.

5. Circuit d'émetteur-récepteur intégré selon la revendication 1, dans lequel: le signal provenant de la sortie du premier synthétiseur PLL de signal d'oscillateur local [9] est acheminé vers l'entrée du mélangeur en quadrature du premier récepteur [102] via le premier réseau de distribution de signal d'oscillateur local du récepteur [5]; le signal provenant de la sortie du deuxième synthétiseur PLL de signal d'oscillateur local [10] est acheminé vers l'entrée du mélangeur en quadrature du deuxième récepteur [202] via le deuxième réseau de distribution de signal d'oscillateur local du récepteur [6]; le signal provenant de la sortie du troisième synthétiseur PLL de signal d'oscillateur local [11] est acheminé vers l'entrée du mélangeur en quadrature du premier émetteur [302] via le premier réseau de distribution de signal d'oscillateur local de l'émetteur [7]; le signal provenant de la sortie du quatrième synthétiseur PLL de signal d'oscillateur local [12] est acheminé vers l'entrée du mélangeur en quadrature du deuxième émetteur [402] via le deuxième réseau de distribution de signal d'oscillateur local de l'émetteur [8]; ce qui met en œuvre une architecture à conversion directe de fréquence comprenant deux chaînes d'émetteur-récepteur radiofréquence indépendantes, configurée pour le duplex par division de fréquence (FDD) dans le circuit d'émetteur-récepteur intégré selon la revendication 1.

6. Circuit d'émetteur-récepteur intégré selon la revendication 1, dans lequel: le signal provenant de la sortie du premier synthétiseur PLL de signal d'oscillateur local [9] est acheminé vers les entrées des mélangeurs en quadrature du premier et du deuxième récepteur [102, 202] via les premier et deuxième réseaux de distribution de signal d'oscillateur local des récepteurs [5, 6]; le signal provenant de la sortie du troisième synthétiseur PLL de signal d'oscillateur local [11] est acheminé vers les entrées des mélangeurs en quadrature du premier et du deuxième émetteur [302, 402] via les premier et deuxième réseaux de distribution de signal d'oscillateur local des émetteurs [7, 8]; ce qui met en œuvre une architecture à conversion directe de fréquence comprenant au moins une chaîne d'émetteur-récepteur à entrées multiples et sorties multiples (MIMO) deux-par-deux, configurée pour le duplex par division de fréquence (FDD) dans le circuit d'émetteur-récepteur intégré selon la revendication 1.

7. Circuit d'émetteur-récepteur intégré selon la revendication 1, dans lequel: le signal provenant de la sortie du premier synthétiseur PLL de signal d'oscillateur local [9] est acheminé vers les entrées des mélangeurs en quadrature du premier et du deuxième récepteur [102, 202] via les premier et deuxième réseaux de distribution de signal d'oscillateur local des récepteurs [5, 6]; le signal provenant de la sortie du deuxième synthétiseur PLL de signal d'oscillateur local [10] est acheminé vers les entrées des mélangeurs du premier et du deuxième récepteur [104, 204] via le deuxième réseau de distribution de signal d'oscillateur local des récepteurs [6]; le signal provenant de la sortie du troisième synthétiseur PLL de signal d'oscillateur local [11] est acheminé vers les entrées des mélangeurs en quadrature du premier et du deuxième émetteur [302, 402] via les premier et deuxième réseaux de distribution de signal d'oscillateur local des émetteurs [7, 8]; le signal provenant de la sortie du quatrième synthétiseur PLL de signal d'oscillateur local [12] est acheminé vers les entrées des mélangeurs du premier et du deuxième émetteur [304, 404] via le deuxième réseau de distribution de signal d'oscillateur local des émetteurs [8]; ce qui met en œuvre une architecture à double conversion de fréquence, configurée pour étendre la plage de fréquences radio de l'émetteur-récepteur de la valeur F_{PLL}, et comprenant au moins une chaîne d'émetteur-récepteur MIMO deux-par-deux, configurée pour le duplex par division de fréquence (FDD) dans le circuit d'émetteur-récepteur intégré selon la revendication 1.

8. Circuit d'émetteur-récepteur intégré selon la revendication 1, dans lequel: le signal provenant de la sortie du troisième synthétiseur PLL de signal d'oscillateur local [11] est acheminé vers l'entrée du mélangeur en quadrature du premier récepteur [102] et vers l'entrée du mélangeur en quadrature du premier émetteur [302] via le premier réseau de distribution de signal d'oscillateur local du récepteur [5] et le premier réseau de distribution de signal d'oscillateur local de l'émetteur [7]; quand le signal provenant de la sortie du quatrième synthétiseur PLL de signal d'oscillateur local [12] est acheminé vers l'entrée du mélangeur en quadrature du deuxième récepteur [202] et vers l'entrée du mélangeur en quadrature du deuxième émetteur [402] via le deuxième réseau de distribution de signal d'oscillateur local du récepteur [6] et le deuxième réseau de distribution de signal d'oscillateur local de l'émetteur [8]; ce qui met en œuvre une architecture à conversion directe de fréquence comprenant deux chaînes d'émetteur-récepteur radiofréquence indépendantes, configurée pour le duplex par répartition dans le temps (TDD) dans le circuit d'émetteur-récepteur intégré selon la revendication 1.

9. Circuit d'émetteur-récepteur intégré selon la revendication 1, dans lequel le signal provenant de la sortie du troisième synthétiseur PLL de signal d'oscillateur local [11] est acheminé vers toutes les entrées des mélangeurs en quadrature des récepteurs et des émetteurs [102, 202, 302, 402] via l'ensemble des réseaux de distribution de signal d'oscillateur local [5, 6, 7, 8], ce qui met en œuvre une architecture à conversion directe de fréquence comprenant au moins une chaîne d'émetteur-récepteur MIMO deux-par-deux, configurée pour le duplex par répartition dans le temps (TDD) dans le circuit d'émetteur-récepteur intégré selon la revendication 1.

10. Circuit d'émetteur-récepteur intégré selon la revendication 1, dans lequel: le signal provenant de la sortie du premier synthétiseur PLL de signal d'oscillateur local [9] est acheminé vers les entrées du mélangeur du deuxième récepteur [204] et du deuxième émetteur [404] via les premier et deuxième réseaux de distribution de signal d'oscillateur local des récepteurs [5, 6] et le deuxième réseau de distribution de signal d'oscillateur local de l'émetteur [8]; et quand le signal provenant de la sortie du deuxième synthétiseur PLL de signal d'oscillateur local [10] est acheminé vers les entrées du mélangeur du premier récepteur [104] et du premier émetteur [304] via le deuxième réseau de distribution de signal d'oscillateur local du récepteur [6] et le deuxième réseau de distribution de signal d'oscillateur local de l'émetteur [8]; et quand le signal provenant de la sortie du troisième synthétiseur PLL de signal d'oscillateur local [11] est acheminé vers l'entrée du mélangeur en quadrature du premier récepteur [102] et du premier émetteur [302] via le premier réseau de distribution de signal d'oscillateur local du récepteur [5] et le premier réseau de distribution de signal d'oscillateur local de l'émetteur [7]; quand le signal provenant de la sortie du quatrième synthétiseur PLL de signal d'oscillateur local [12] est acheminé vers l'entrée du mélangeur en quadrature du deuxième récepteur [202] et du deuxième émetteur [402] via le deuxième réseau de distribution de signal d'oscillateur local du récepteur [6] et le deuxième réseau de distribution de signal d'oscillateur local de l'émetteur [8]; ce qui met en œuvre une architecture à double conversion de fréquence, configurée pour étendre la plage de fréquences radio de l'émetteur-récepteur de la valeur F_{PLL}, et comprenant deux chaînes d'émetteur-récepteur radiofréquence indépendantes, configurées pour le duplex par répartition dans le temps (TDD) dans le circuit d'émetteur-récepteur intégré selon la revendication 1.

11. Circuit d'émetteur-récepteur intégré selon la revendication 1, dans lequel: le signal provenant de la sortie du troisième synthétiseur PLL de signal d'oscillateur local [11] est acheminé vers toutes les entrées des mélangeurs en quadrature des récepteurs et des émetteurs [102, 202, 302, 402] via l'ensemble des réseaux de distribution de signal d'oscillateur local [5, 6, 7, 8]; et quand le signal provenant de la sortie du quatrième synthétiseur PLL de signal d'oscillateur local [12] est acheminé vers toutes les entrées des mélangeurs des récepteurs et des émetteurs [104, 204, 304, 404] via le deuxième réseau de distribution de signal d'oscillateur local du récepteur [6] et le deuxième réseau de distribution de signal d'oscillateur local de l'émetteur [8]; ce qui met en œuvre une architecture à double conversion de fréquence, configurée pour étendre la plage de fréquences radio de l'émetteur-récepteur de la valeur F_{PLL}, et comprenant au moins une chaîne d'émetteur-récepteur MIMO deux-par-deux, configurée pour le duplex par répartition dans le temps (TDD) dans le circuit d'émetteur-récepteur intégré selon la revendication 1.
